# EUROPEAN PATENT APPLICATION

(11) **EP 2 993 316 A1**
(43) Date of publication of application: **09.03.2016**
(21) Application number: 15185510.3
(22) Date of filing: 17.10.2013
(51) Int. Cl.: F01K 23/06, F01K 25/08, F01K 23/10, F02G 5/02

(54) **WASTE HEAT RECOVERY SYSTEM**

(30) Priority: 17.10.2012 US 201261714964 P; 29.05.2013 US 201361828260 P
(62) Divisional of application: 13795850.0
(71) Applicant: NORGREN LIMITED, Lichfield Staffordshire WS13 6SB (GB)
(72) Inventor: MORRIS, John, Washington, WA Washington 98001 (US); SEALY, Mark, Alcester, Warwickshire B50 4HQ (GB); WILLIAMS, Patrick, Birmingham, West Midlands B31 2PF (GB); NARBOROUGH, Christopher, Swadlincote, Derbyshire DE12 6JB (GB)
(74) Representative: Gray, James

(57) **Abstract**

A waste heat recovery system (100) for an engine (101) comprises a fluid supply (104); one or more evaporators (120, 121) adapted to transfer waste heat from the engine (101) to fluid from the fluid supply (104) to heat the fluid to a superheated vapor; a condenser (134); a bypass circuit (130) in fluid communication with an outlet on the one or more evaporators (120, 121) and an inlet on the condenser (134); and an injection port (465) in fluid communication with the fluid supply (104) and the bypass circuit (130) and adapted to inject fluid from the fluid supply (104) into the bypass circuit (130) to cool the superheated vapor in the bypass circuit (130). A waste heat recovery system (100) for an engine (101) also comprises one or more evaporators (120, 121) adapted to transfer waste heat from the engine (101) to fluid from a fluid supply (104) wherein the engine (101) generates the waste heat with the fluid.

## Description

### TECHNICAL FIELD

The embodiments described below relate to, waste heat recovery systems, and more particularly, to a vehicle waste heat recovery system.

### BACKGROUND OF THE INVENTION

Internal combustion (IC) engines are used throughout the world and mainly for motor vehicles. IC engines account for one of the largest consumers of petroleum products known. Due to the large amount of petroleum products consumed by IC engines and the gases exhausted from IC engines, numerous regulatory agencies have implemented regulations or are in the process of implementing regulations that require minimum average fuel economy of vehicles as well as limit the amount of pollutants that are exhausted from vehicles.

Earlier attempts at reducing vehicle emissions have centered on exhaust gas treatments. For example, earlier attempts have introduced reagents into the exhaust gas stream prior to the gas passing through a catalyst in order to effect selective catalytic reduction (SCR) of the nitrogen oxides (NOₓ) in the exhaust gases. Additionally, many vehicles now include exhaust gas recirculation (EGR) systems to recirculate at least some of the exhaust gases. Although EGR reduces the harmful emissions of vehicles, it also often reduces the vehicle's fuel economy.

The uses of SCR and EGR have been effective in reducing the emission problems in the exhaust stream, but have done little in improving the fuel economy and fuel consumption of vehicles. With the tighter regulations that are being implemented, many manufacturers have turned their focus to increasing the fuel economy of IC engines. It is generally known that only about thirty to forty percent of the energy produced by the fuel combustion of IC engines translates to mechanical power. Much of the remaining energy is lost in the form of heat. Therefore, one particular area of focus in the motor vehicle industry has been to recover some of the heat that is generated by the IC engine using a Rankine cycle.

While these prior art attempts have improved the vehicle's efficiency, they lack adequate control of the working fluid and the working fluid's temperature. For example, United States Patent 4,031,705 discloses a heat recovery system that heats the working fluid using heat from the IC engine's exhaust and the IC engine's cooling circuit, *i*.*e*., the IC engine's radiator. Therefore, while the '705 patent does utilize multiple heat sources, there is no way to adequately control where the heat is being drawn from. This can be problematic at times since insufficient flow of working fluid to a heat source can reduce the overall efficiency of the heat recovery system and/or result in wet steam being fed to the expander.

An additional problem with the '705 patent is that the bypass circuit directs vapor directly into a condenser. Although this is typically not a problem for lower temperature and/or pressure vapors, as the temperature and/or pressure increases, the shock to the condenser caused by receiving superheated vapor can reduce the life expectancy of the condenser.

Other heat exchanger arrangements are found in other disclosures. For example, DE 10 2006 043835 discloses a heat exchanger arrangement is provided for an internal-combustion engine having a heat engine which converts hot steam of a working machine, by way of an expansion device, to kinetic energy. The working medium, that can be delivered by a pump, is heatable in a first heat exchanger by a coolant and in a second heat exchanger by an exhaust gas of the internal-combustion engine. In the delivery direction, the working medium first flows through the first heat exchanger and, subsequently, through the second heat exchanger, wherein the exhaust gas can flow through the first heat exchanger.

In WO 2012/061812, a waste heat recovery apparatus and process for use with an internal combustion engine includes a thermo electric apparatus that connects to components of the internal combustion engine to transfer heat between components, generate electric energy from heat extracted from components needing cooling, and convert electric energy to heat energy to transfer to components needing heating.

Power generating plant facilities also use waste heat recovery. For example, WO 2012/018004 discloses power generation plant facilities equipped with a steam flow rate adjusting valve provided in a superheated steam pipe on the upstream side of a steam turbine. When starting up the steam turbine, the control unit of the power generation plant facilities controls the steam flow rate adjusting valve so as to increase the opening degree from a closed state and increase the frequency of the steam turbine and an exhaust heat recovery generator.

The embodiments described below overcome these and other problems and an advance in the art is achieved. The embodiments described below disclose a waste heat recovery system for an engine that includes a valve module to selectively control the flow of a working fluid between two or more evaporators. Further, the embodiments described below can include a bypass system that can cool superheated working fluid prior to reaching a condenser to alleviate and reduce some of the thermal shock experienced by the condenser.

### SUMMARY OF THE INVENTION

A waste heat recovery system for an engine is provided according to an embodiment. The waste heat recovery system comprises a fluid supply and two or more evaporators positioned in parallel to one another and receiving waste heat from the engine. According to an embodiment, the waste heat recovery system further comprises a valve module including an inlet port in fluid communication with the fluid supply, a first outlet port in fluid communication with a first evaporator of the two or more evaporators, and a second outlet port in fluid communication with a second evaporator of the two or more evaporators for selectively providing a fluid communication path between the fluid supply and one or more of the two or more evaporators. According to an embodiment, an expander is in fluid communication with an outlet of the two or more evaporators and a condenser is in fluid communication with an outlet of the expander and an inlet of the fluid supply.

A waste heat recovery system for an engine is provided according to another embodiment. The waste heat recovery system comprises a fluid supply and one or more evaporators in fluid communication with the fluid supply and receiving waste heat from the engine. According to an embodiment, the waste heat recovery system also includes a bypass valve. The bypass valve includes an inlet port in fluid communication with an outlet of the one or more evaporators. The bypass valve further includes a first outlet port in fluid communication with an expander and a second outlet port in fluid communication with a condenser, wherein the second outlet port includes an injection port in fluid communication with the fluid supply.

A waste heat recovery system for an engine is provided according to an embodiment. The waste heat recovery system comprises one or more evaporators adapted to transfer waste heat from the engine to fluid from a fluid supply wherein the engine generates the waste heat with the fluid.

A waste heat recovery system for an engine is provided according to an embodiment, The waste heat recovery system comprises one or more evaporators adapted to transfer waste heat from the engine to fluid from a fluid supply to heat the fluid to a superheated vapor. The waste heat recovery system includes a bypass circuit in fluid communication with the outlet on the one or more evaporators and an inlet on a condenser. The waste heat recovery system further includes an injection port in fluid communication with the fluid supply and the bypass circuit wherein the fluid from the fluid supply cools the superheated vapor in the bypass circuit based on a parameter in the waste heat recovery system or the engine.

A method for recovering waste heat from an engine is provided according to an embodiment. The method comprises a step of selectively providing a fluid from a fluid supply to two or more evaporators positioned in parallel, which receive waste heat from the engine. According to an embodiment, the method further comprises a step of outputting the fluid from one or more of the two or more evaporators to an expander, which converts at least a portion of the energy of the fluid into mechanical energy. According to an embodiment, the method further comprises a step of outputting the fluid from the expander to a condenser in fluid communication with the fluid supply.

A method of recovering waste heat from an engine is provided according to an embodiment. The method comprises generating the waste heat with the engine from fluid from a fluid supply and transferring waste heat from the engine to fluid from the fluid supply with one or more evaporators.

A method of recovering waste heat from an engine with a waste heat recovery system comprises generating superheated vapor with one or more evaporators with the waste heat from the engine and cooling the superheated vapor with fluid from a fluid supply based on a parameter in the waste heat recovery system or the engine.

### ASPECTS

According to an aspect, a waste heat recovery system for an engine comprises:
a fluid supply;
two or more evaporators positioned in parallel to one another and receiving waste heat from the engine;
a valve module including an inlet port in fluid communication with the fluid supply, a first outlet port in fluid communication with a first evaporator of the two or more evaporators, and a second outlet port in fluid communication with a second evaporator of the two or more evaporators for selectively providing a fluid communication path between the fluid supply and one or more of the two or more evaporators;
an expander in fluid communication with an outlet of the two or more evaporators; and
a condenser in fluid communication with an outlet of the expander and an inlet of the fluid supply.

Preferably, the valve module comprises a first liquid control valve selectively providing a fluid communication path between the fluid supply and the first evaporator and a second liquid control valve selectively providing a fluid communication path between the fluid supply and the second evaporator.

Preferably, the first and second liquid control valves comprise proportional valves.

Preferably, the first and second liquid control valves comprise proportional needle valves.

Preferably, the waste heat recovery system further comprises one or more bushings positioned within a housing of the valve module and forming a substantially fluid-tight seal with a valve member of the proportional needle valve.

Preferably, the valve member comprises a tapered needle having a maximum diameter, which tapers down to a minimum diameter.

Preferably, the waste heat recovery system further comprises an elastomer sealing member forming a substantially fluid-tight seal between the valve member and the housing outside of the substantially fluid-tight seal between the valve member and the one or more bushings.

Preferably, the waste heat recovery system further comprises a pressure control valve in parallel with the valve module.

Preferably, the waste heat recovery system further comprises a vapor control module positioned between the two or more evaporators and the expander for selectively providing a fluid communication path between the two or more evaporators and the expander or the two or more evaporators and a bypass circuit.

Preferably, the vapor control module comprises a bypass valve comprising an inlet port in fluid communication with the two or more evaporators, a second fluid port in fluid communication with the bypass circuit and selectively in fluid communication with the inlet port, and a third fluid port in fluid communication with the expander and selectively in fluid communication with the inlet port.

Preferably, the bypass valve comprises a pilot valve actuator for actuating the bypass valve from a first position to a second position.

Preferably, the pilot valve actuator is selectively in fluid communication with the fluid supply via a pilot supply valve.

Preferably, the waste heat recovery system further comprises an injection port in fluid communication with the second fluid port and selectively in fluid communication with the fluid supply via a de-superheat control valve.

Preferably, the waste heat recovery system further comprises a venturi positioned in the second fluid port.

According to another aspect, a waste heat recovery system for an engine comprises:
a fluid supply;
one or more evaporators in fluid communication with the fluid supply and receiving waste heat from the engine;
a bypass valve including:
   an inlet port in fluid communication with an outlet of the one or more evaporators;
   a first outlet port in fluid communication with an expander; and
   a second outlet port in fluid communication with a condenser, wherein the second outlet port includes an injection port in fluid communication with the fluid supply.

Preferably, the waste heat recovery system further comprises:
two or more evaporators positioned in parallel to one another; and
a valve module including an inlet port in fluid communication with the fluid supply, a first outlet port in fluid communication with a first evaporator of the two or more evaporators, and a second outlet port in fluid communication with a second evaporator of the two or more evaporators for selectively providing a fluid communication path between the fluid supply and one or more of the two or more evaporators.

Preferably, the valve module comprises a first liquid control valve selectively providing a fluid communication path between the fluid supply and the first evaporator and a second liquid control valve selectively providing a fluid communication path between the fluid supply and the second evaporator.

Preferably, the first and second liquid control valves comprise proportional valves.

Preferably, the first and second liquid control valves comprise proportional needle valves.

Preferably, the waste heat recovery system further comprises one or more bushings positioned within a housing of the valve module and forming a substantially fluid-tight seal with a valve member of the proportional needle valve.

Preferably, the valve member comprises a tapered needle having a maximum diameter, which tapers down to a minimum diameter.

Preferably, the waste heat recovery system further comprises an elastomer sealing member forming a substantially fluid-tight seal between the valve member and the housing outside of the substantially fluid-tight seal between the valve member and the one or more bushings.

Preferably, the waste heat recovery system further comprises a pressure control valve in parallel with the valve module.

Preferably, the bypass valve comprises a pilot valve actuator for actuating the bypass valve from a first position to a second position.

Preferably, the pilot valve actuator is selectively in fluid communication with the fluid supply via a pilot supply valve.

Preferably, the waste heat recovery system further comprises a venturi positioned in the second fluid port.

According to an aspect, waste heat recovery system for an engine, comprises:
one or more evaporators adapted to transfer waste heat from the engine to fluid from a fluid supply wherein the engine generates the waste heat with the fluid.

Preferably, the engine is in fluid communication with the fluid supply.

Preferably, the fluid supply comprises a fuel tank for the engine.

Preferably, the fluid comprises fuel for the engine.

According to an aspect, a waste heat recovery system for an engine, comprising:
one or more evaporators adapted to transfer waste heat from the engine to fluid from a fluid supply to heat the fluid to a superheated vapor;
a bypass circuit in fluid communication with the outlet on the one or more evaporators and an inlet on a condenser; and
an injection port in fluid communication with the fluid supply and the bypass circuit wherein the fluid from the fluid supply cools the superheated vapor in the bypass circuit based on a parameter in the waste heat recovery system or the engine.

Preferably, the parameter is a temperature in the waste heat recovery system.

Preferably, the parameter is a pressure in the waste heat recovery system.

Preferably, the parameter is a power output of the engine.

Preferably, the parameter is a parameter of a vapor control module.

According to another aspect, a method for recovering waste heat from an engine comprises:
selectively providing a fluid from a fluid supply to two or more evaporators positioned in parallel, which receive waste heat from the engine;
outputting the fluid from one or more of the two or more evaporators to an expander, which converts at least a portion of the energy of the fluid into mechanical energy; and
outputting the fluid from the expander to a condenser in fluid communication with the fluid supply.

Preferably, the step of selectively providing the fluid from the fluid supply to the two or more evaporators comprises proportionally controlling a fluid communication path between the fluid supply and a first one of the two or more evaporators with a first liquid control valve and proportionally controlling a fluid communication path between the fluid supply and a second one of the two or more evaporators with a second liquid control valve.

Preferably, the proportional control uses a needle shaped valve member that forms a substantially fluid-tight seal with one or more bushings.

Preferably, the method further comprises a step of actuating a pressure control valve to control a pressure of the fluid provided to the two or more evaporators.

Preferably, the step of outputting the fluid from the two or more evaporators to the expander comprises using a bypass valve including a fluid inlet port in fluid communication with the two or more evaporators, a first outlet port in fluid communication with the expander, and a second outlet port in fluid communication with the condenser.

Preferably, the method further comprises a step of actuating the bypass valve to a first position to open a fluid communication path between the fluid inlet port and the second outlet port.

Preferably, the method further comprises a step of injecting the fluid from the fluid supply into the second outlet port.

Preferably, the method further comprises a step of actuating the bypass valve to a second position to open a fluid communication path between the fluid inlet port and the first outlet port by opening a fluid communication path between the fluid supply and a pilot valve actuator of the bypass valve.

According to another aspect, a method of recovering waste heat from an engine, comprises:
generating the waste heat with the engine from fluid from a fluid supply; and
transferring waste heat from the engine to fluid from the fluid supply with one or more evaporators.

Preferably, the fluid is a fuel for the engine.

Such an arrangement offers the convenience of a single fluid for both heat generation and heat transfer purposes. It also offers a convenient mechanism for disposal of working fluid where a working fluid is prone to breaking down.

According to another aspect, a method of recovering waste heat from an engine with a waste heat recovery system, comprises:
generating superheated vapor with one or more evaporators with the waste heat from the engine; and
cooling the superheated vapor with fluid from a fluid supply based on a parameter in the waste heat recovery system or the engine.

Preferably, the parameter is a temperature in the waste heat recovery system.

Preferably, the parameter is a power output of the engine.

Preferably, the parameter is a parameter of a vapor control module.

In each of the foregoing aspects, the engine may be an internal combustion engine.

Preferably, the internal combustion engine is a reciprocating piston engine.

Preferably, the internal combustion engine is configured to be mounted on, and to drive, a vehicle.

Preferably, the internal combustion engine is configured to operate according to a highway cycle.

### BRIEF DESCRIPTION OF THE DRAWINGS

FIG. 1 shows a schematic of a waste heat recovery system for an engine according to an embodiment.
FIG. 2 shows a cross-sectional view of a valve module according to an embodiment.
FIG. 3 shows a cross-sectional view of a portion of a liquid control valve according to an embodiment.
FIG. 4 shows a cross-sectional view of a vapor control module according to an embodiment.

### DETAILED DESCRIPTION OF THE INVENTION

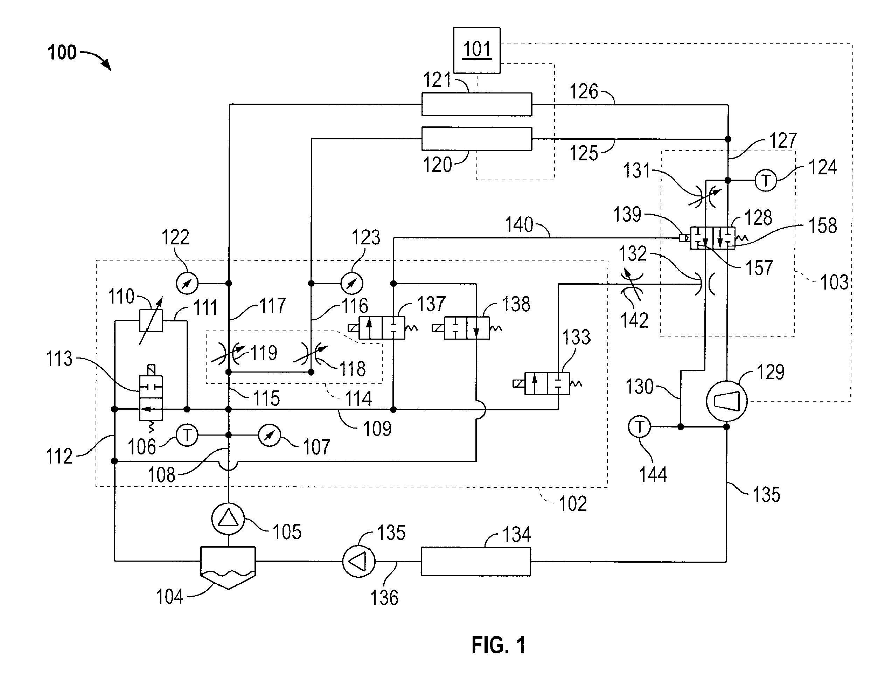

FIGS. 1 - 4 and the following description depict specific examples to teach those skilled in the art how to make and use the best mode of embodiments of a vehicle waste heat recovery system. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of the vehicle waste heat recovery system. As a result, the embodiments described below are not limited to the specific examples described below, but only by the claims and their equivalents.

**FIG. 1** shows a schematic of a waste heat recovery system 100 for an engine 101 according to an embodiment. The waste heat recovery system 100 may be implemented for an engine 101 of a motor vehicle (not shown), for example. Therefore, the engine 101 may comprise an IC engine, in particular a reciprocating piston engine. The vehicle may be an on-road truck, the operation of which is set out in the standard 'highway cycle' or World Harmonised Test Cycle (WHTC). Such a truck engine may particularly be powered by diesel or natural gas. According to an embodiment, the waste heat recovery system 100 can include a liquid control module 102 and a steam control module 103. According to an embodiment, the waste heat recovery system 100 includes a fluid supply 104. The fluid supply 104 may include a fluid, such as water, Freon®, ethanol, etc. The particular fluid used may vary from one application to another. For example, the fluid may be the fuel used by the engine 101.

A high-pressure fluid pump 105 is in fluid communication with an outlet of the fluid supply 104. The high-pressure fluid pump 105 may be driven by the engine 101 or may be driven by a separate electric motor, for example. The high-pressure fluid pump 105 can elevate the pressure of the fluid from a reservoir pressure to a higher threshold pressure. In some embodiments, the high-pressure fluid pump 105 may raise the pressure of the fluid to a threshold pressure of approximately 40 bar (580 psi) from the reservoir pressure, which is typically at atmospheric pressure. However, other threshold pressures are certainly possible and the particular example pressure should in no way limit the scope of the present embodiment. At the outlet of the high-pressure fluid pump 105, are optional temperature 106 and pressure 107 sensors. The temperature and pressure sensors 106, 107 are in fluid communication with the high-pressure fluid pump 105 via a fluid line 108.

According to an embodiment, the fluid line 108 can be in fluid communication with a plurality of other fluid lines via a line manifold 109, which are shown in FIG. 1 and will be described from left to right as shown in FIG. 1. According to an embodiment, the waste heat recovery system 100 can include a pressure control valve 110, which is in fluid communication with the line manifold 109 via a fluid line 111. The fluid line 111 branches off from the fluid line 108. The pressure control valve 110 can control the fluid pressure within the liquid control module 102 to ensure that the high-pressure fluid pump 105 does not over-pressurize the fluid in the liquid control module 102. In many embodiments, the high-pressure fluid pump 105 can pressurize the fluid to a higher pressure than is desired to be delivered to the rest of the system 100. Therefore, the pressure control valve 110 can regulate the fluid pressure in the liquid control module 102 so it does not exceed a threshold pressure. The pressure control valve 110 is further in fluid communication with the fluid supply 104 via a fluid line 112. According to an embodiment, the pressure control valve 110 may be controlled based on a predetermined set point pressure or may be actively controlled by a main system controller (not shown).

The main system controller and the electrical leads to the controllable components of the waste heat recovery system 100 are not shown in FIG. 1 to reduce the complexity of the figure. However, those skilled in the art will readily appreciate suitable electronics that may be used to control the waste heat recovery system 100. For example, the main system controller may comprise a portion of the vehicle's main electronics. Those skilled in the art can readily appreciate that the electronics can control the various valves that are described further below based on temperature and pressure measurements of the system, for example. So long as the electronics can adequately control the actuation of the various valves discussed below, the particular electronics used is not important for purposes of the claims that follow and thus, should in no way limit the scope of the presently described embodiment.

According to an embodiment, the waste heat recovery system 100 can further include a system drain valve 113. In the embodiment shown, the system drain valve 113 comprises a normally open solenoid actuated valve; however, other types of valves can certainly be used. When de-actuated, the system drain valve 113 can drain the fluid back to the fluid supply 104. This may occur when the vehicle is turned off, when fluid is not desired to be run through the waste heat recovery system 100, or in the event of an emergency, for example.

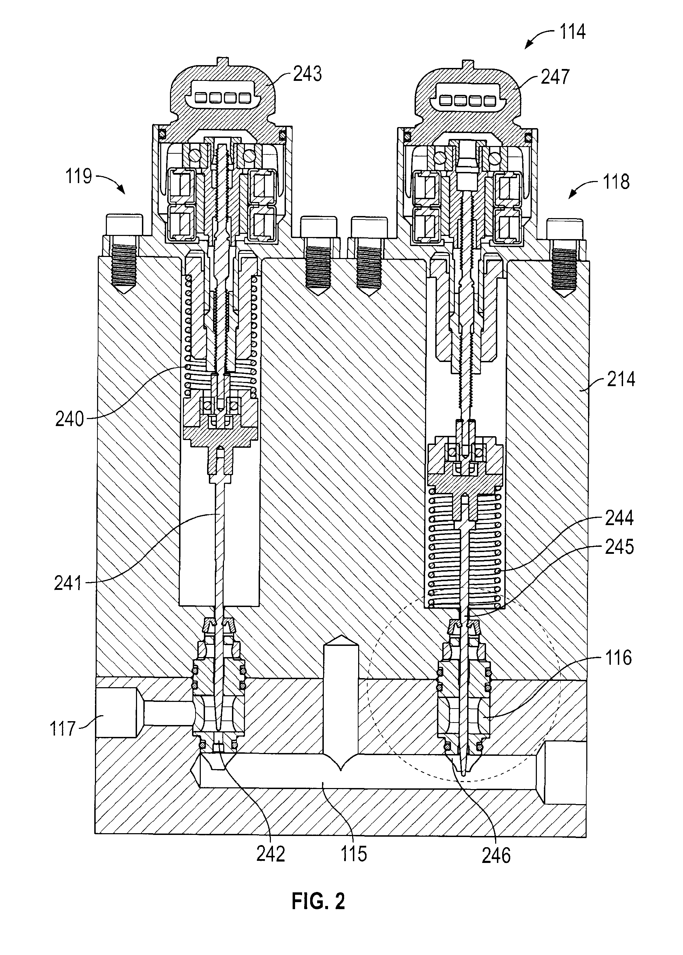

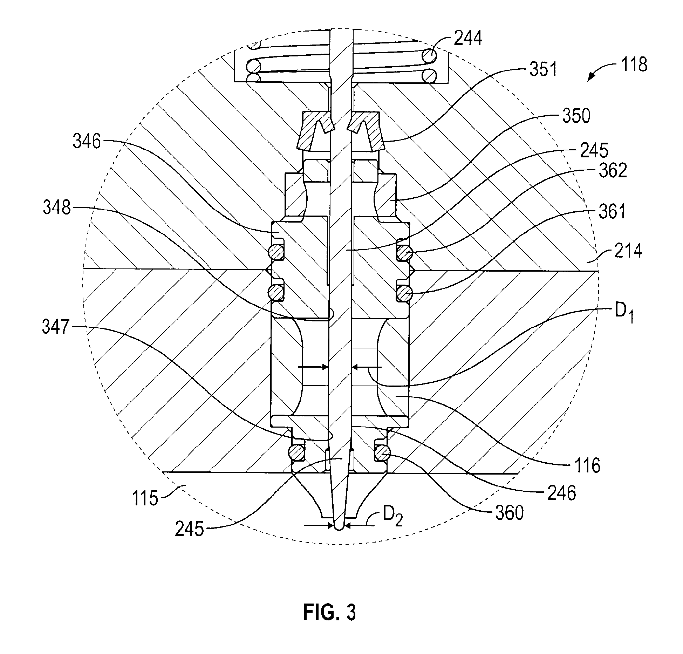

Moving to the right in FIG. 1, the waste heat recovery system 100 further comprises a valve module 114. According to an embodiment, the valve module 114 can be in parallel with the pressure control valve 110. Therefore, those skilled in the art can readily recognize that while the high-pressure fluid pump 105 may deliver a varying pressure that is higher than the desired threshold pressure to the liquid control module 102, the pressure control valve 110 can ensure that the valve module 114 receives a relatively constant input pressure. The valve module 114 can include one or more fluid inlets 115 and two or more fluid outlets 116, 117. In the embodiment shown, only one fluid inlet 115 is shown. However, in other embodiments, the fluid line 108 may branch off before reaching the valve module 114, and thus, the valve module 114 can include more than one fluid inlet. According to an embodiment, the valve module 114 can include two or more liquid control valves 118, 119. In one embodiment, the two or more liquid control valves 118, 119 can be in the form of proportional valves. According to an embodiment, the valves 118, 119 may comprise proportional needle valves (See FIGS. 2 & 3); however, those skilled in the art will readily recognize other types of valves may be utilized. The proportional needle valves are described in more detail below. According to an embodiment, the valve module 114 can selectively provide a fluid communication path between the fluid supply 104 and one or more of the two or more evaporators 120, 121.

According to an embodiment, the two or more evaporators 120, 121 may receive waste heat generated by the engine 101. For example, in one embodiment, the first evaporator 120 uses the heat from the engine's EGR while the second evaporator 121 uses the heat from the engine's exhaust. A third evaporator, not shown, may receive heat from a third source, such as the charge air circuit. According to an embodiment, the two or more evaporators 120, 121 may be at different temperatures. Therefore, the valve module 114 can control the actuation of the valves 118, 119 based on a measured temperature at the inlet of the vapor control module 103. In addition to the temperature measured at the inlet of the vapor control module 103, pressure sensors 122, 123 may be provided at the outlets 116, 117 of the valve module 114. It should be appreciated however, that the pressure sensors 122, 123 are optional and may be omitted.

Because of the elevated temperature of the two or more evaporators 120, 121, the liquid leaving the valve module 114 can become a superheated vapor. For example, in one embodiment, the valve module 114 can control the two or more valves 118, 119 such that the superheated vapor entering the vapor control module 103 is at approximately 400°C (752°F) and 40 bar (580 psi). However, those skilled in the art can readily appreciate that these values may vary based on the particular application and should in no way limit the scope of the present embodiment.

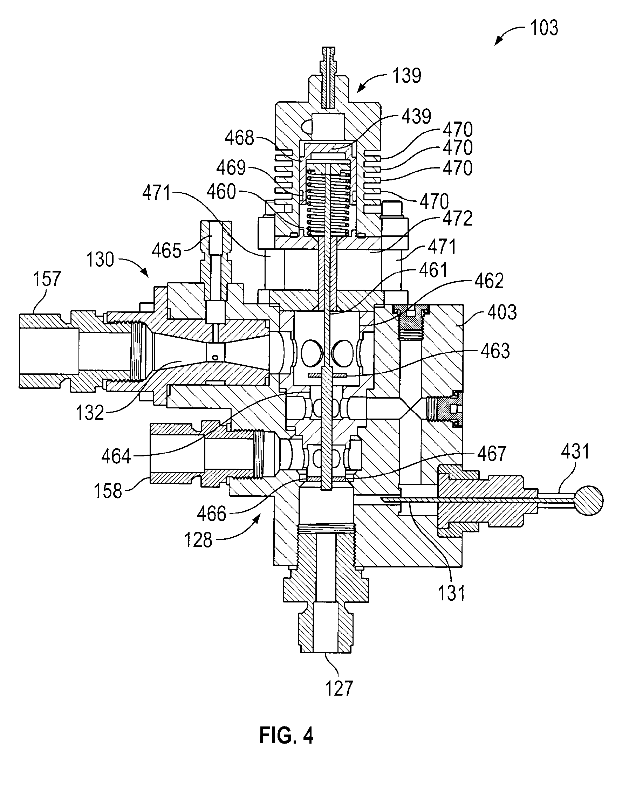

According to the embodiment shown, the two evaporators 120, 121 are in fluid communication with the vapor control module 103 via fluid lines 125, 126, which join prior to an inlet port 127 of the vapor control module 103. A cross-sectional view of the vapor control module 103 is shown in greater detail in FIG. 4 and discussed further below. With regard to the schematic shown in FIG. 1, it can be seen that the vapor control module 103 can comprise a bypass valve 128. In the embodiment shown, the bypass valve 128 comprises a spring biased, fluid actuated 3/2-way valve. However, those skilled in the art can readily appreciate alternative valve designs that will fall within the scope of the claims that follow.

In the embodiment shown, the bypass valve 128 can selectively provide a fluid communication path between the two or more evaporators 120, 121 and either an expander 129 or a bypass circuit 130. According to an embodiment, the bypass valve 128 can include the inlet port 127, a first outlet port 157, and a second outlet port 158. According to an embodiment, the bypass valve 128 can be biased towards a first position where a fluid communication path is provided between the two or more evaporators 120, 121 and the bypass circuit 130. Therefore, in a default position, the expander 129 is bypassed and waste heat from the engine 101 is not recovered and rather, flows directly to a condenser 134. According to an embodiment, in the first position, the fluid from the two or more evaporators 120, 121 flows through a needle valve 131 and a venturi 132. In some embodiments, the venturi 132 can receive an optional fluid supply from the liquid control module 102 via a de-superheat control valve 133. Valve 133 is in fluid communication with the fluid line 108 and thus, the fluid supply 104. As can be appreciated, the fluid within the fluid line 108 is pressurized to the threshold pressure, but is not heated yet by the evaporators 120, 121. Therefore, injection of fluid from the fluid supply 104 can cool the superheated vapor flowing through the vapor control module 103 to de-superheat the fluid. As can be seen, the bypass circuit 130 is in fluid communication with the condenser 134 via a fluid line 135. Therefore, by injecting the superheated vapor with fluid from the fluid supply 104 and thus, de-superheating the fluid, a substantially cooler fluid can be provided to the condenser 134, which reduces the thermal shock to the condenser 134. The fluid can flow from the condenser 134 back to the fluid supply 104 via a low-pressure pump 135 positioned in the fluid line 136.

According to an embodiment, actuating a pilot supply valve 137 and an exhaust valve 138 can actuate the bypass valve 128 from the first position to a second position. The pilot supply valve 137 can supply fluid from the fluid supply 104 to a pilot valve actuator 139 via the fluid line 140. Therefore, the pilot supply valve 137 can selectively provide a fluid communication path between the fluid supply 104 and the pilot valve actuator 139. The fluid supplied to the pilot valve actuator 139 can actuate the bypass valve 128 to a second position. According to an embodiment, in the second position, the bypass valve 128 can selectively provide a fluid communication path between the two or more evaporators 120, 121 and the expander 129. The superheated vapor flows to the expander 129 where it reduces in enthalpy while expanding as is generally known in the art. Therefore, the expander 129 can convert at least some of the energy of the superheated vapor to mechanical work. The expander 129 can comprise a variety of well-known devices, such as a turbine, a piston, a vapor engine, such as a rotary vane type vapor engine, etc. The particular type of expander 129 utilized is not important for purposes of the present description and should in no way limit the scope of the claims that follow. For purposes of the present application, the important aspect of the expander 129 is that it can convert some or a portion of the energy of the superheated vapor into useful mechanical energy. In some embodiments where the expander 129 comprises a vapor engine, for example, the expander 129 can be coupled to the crankshaft or other suitable component of the engine 101 in order to add power to the engine 101 as is generally known in the art. Therefore, in times when the expander 129 is not generating useful power, the engine 101 does not transfer power to the expander 129, which would decrease the engine's efficiency.

According to an embodiment, the fluid can leave the expander 129 and travel to the condenser 134 via the fluid line 135 where the fluid is cooled and delivered back to the fluid supply 104.

With a basic description of the overall waste heat recovery system 100, attention is now drawn to particular features of the waste heat recovery system 100 that allow for accurate fluid control and high temperature and pressure operation.

**FIG. 2** shows a cross-sectional view of the valve module 114 according to an embodiment. According to an embodiment, the valve module 114 comprises a housing 214, which may be separated into multiple parts as shown. According to the embodiment shown, the valve module 114 comprises the two liquid control valves 118, 119. According to an embodiment, the first liquid control valve 118 comprises a normally opened valve while the second liquid control valve 119 comprises a normally closed valve.

According to an embodiment, the first liquid control valve 118 comprises a biasing member 244, which biases a valve member 245 away from a valve seat 246. In the embodiment shown, the valve member 245 also comprises a needle. A linear stepper motor 247 or some other actuator can be provided to actuate the valve member 245 towards the valve seat 246. According to an embodiment, the second liquid control valve 119 comprises a biasing member 240, which biases a valve member 241 towards a valve seat 242. In the embodiment shown, the valve member 241 comprises a movable needle. The needle is tapered, which allows for proportional control of the fluid. A linear stepper motor 243 or some other actuator can be provided to actuate the valve member 241 away from the valve seat 242.

Although other types of actuators are certainly possible, linear stepper motors are generally known and can provide relatively accurate positional control, which can allow proportional fluid control. Therefore linear stepper motors are particularly suitable for the present application.

It should be appreciated that while the liquid control valves 118, 119 are described as comprising normally open and normally closed valves, the reverse could also occur. Alternatively, both of the valves 118, 119 may be biased towards the same direction, i.e., both normally closed or both normally open. Therefore, the particular configuration shown should in no way limit the scope of the present embodiment.

As shown in FIG. 2, the valve member 241 can selectively provide a fluid communication path between the inlet 115 and the outlet 117. Similarly, the valve member 245 can selectively provide a fluid communication path between the inlet 115 and the outlet 116.

**FIG. 3** shows an enlarged view of a portion of the valve 118 according to an embodiment. Although the discussion relates to the valve 118, it should be appreciated that other than the position of the biasing members 240, 244, the valves operate substantially similarly. Therefore, the features discussed in relation to FIG. 3 can easily be applied for the valve 119. As mentioned above, the waste heat recovery system 100 can operate under relatively high pressures (40 bar, 580 psi) and elevated temperatures. Therefore, the valves 118, 119 include certain features that allow for such high pressures without failing prematurely. According to an embodiment, the valve seat 246 can comprise one or more bushings 346, which forms a substantially fluid tight seal with the valve module housing 214. In the embodiment shown, a one-piece bushing 346 is provided; however, it should be appreciated that in alternative embodiments, the bushing 346 can be separated into multiple components. The bushing 346 can form a fluid tight seal with the housing 214 via one or more sealing members 360, 361, 362. According to an embodiment, the bushing 346 can comprise a lower bore 347 and an upper bore 348. The valve member 245 can slide within the lower and upper bores 347, 348 and can form a substantially fluid-tight seal. The seal between the valve member 245 and the bores 347, 348 is due to the extremely tight tolerances between the components. Although the particular dimensions may vary, in one embodiment, the difference between the inner radius of the bores 347, 348 and the outer radius of the valve member 245 is between 5-10 microns (0.0002-0.0004 inches). For example, in one embodiment, the valve member 245 comprises a maximum diameter, D₁ of 2.0000 mm while the bores 347, 348 comprise an inner diameter of 2.0005 mm.

According to the embodiment shown, the valve member 245 is in the closed position wherein a portion of the valve member 245 having a maximum diameter, D₁ is sealed against the lower bore 347. Consequently, because of the tight sealing tolerance, a substantially fluid-tight seal is formed and most of the fluid is prevented from flowing from the inlet 115 towards the outlet 116. However, as the valve member 245 is raised upwards (according to the orientation shown), the diameter of the valve member 245 proximate the lower bore 347 decreases to a minimum diameter, D₂. As the diameter proximate the lower bore 347 decreases, a space between the valve member 245 and the lower bore 347 is created to allow fluid to flow from the inlet 115 towards the outlet 116. As can be appreciated, when the entire valve member 245 is above the lower bore 347, a maximum flow can be achieved. However, while at least a portion of the valve member 245 remains within a portion of the lower bore 347, proportional flow control can be achieved.

Although the tight tolerances between the bores 347, 348 and the valve member 245 are designed to provide a substantially fluid tight sealing, at higher pressures, some fluid is likely to leak past the substantially fluid-tight seal and thus, the valve module 114 includes a fluid return port 350. The fluid return port 350 is positioned between the bushing 346 and the biasing member 244. The fluid return port 350 may be in fluid communication with the fluid supply 104, for example. While the maximum diameter D₁ of the valve member 245 maintains a substantially fluid tight seal with the upper bore 348, in the event that fluid flows past the valve member/upper bore interface, the fluid will simply be diverted back to the fluid supply 104 at a substantially reduced pressure via the fluid return port 350. A sealing member 351 can also prevent fluid from flowing past the fluid return port 350 towards the biasing member 244. According to an embodiment, the sealing member 351 may comprise an elastomer sealing member, for example. However, other types of sealing members may be used.

The features described above for the valve module 114 allow for precise and proportional control of high-pressure liquids. In addition to the valve module 114, the waste heat recovery system 100 also needs to be able to adequately control the flow of superheated vapor.

**FIG. 4** shows a cross-sectional view of the vapor control module 103 according to an embodiment. According to an embodiment, the vapor control module 103 comprises a housing 403, which houses the bypass valve 128. As shown, the bypass valve 128 can include a biasing member 460, which can bias a valve member 461 towards a first position. In the first position illustrated in figure 4, the valve member 461 can open a fluid communication path between the inlet port 127 and the first outlet port 157 and close a fluid communication path between the inlet port 127 and the second outlet port 158. According to an embodiment, between the inlet port 127 and the outlet port 157 is a needle valve 131. The needle valve 131 can be provided to control the flow rate and pressure through the vapor control module 103. According to an embodiment, the needle valve 131 can be adjusted by actuating the adjustor 431. As shown, when the bypass valve 128 is in the first position, fluid can flow from the inlet port 127, through the needle valve 131 to a bypass fluid chamber 462. According to an embodiment, the valve member 461 includes a valve seal 463, which is located within the bypass fluid chamber 462 and is configured to seal against a valve seat 464. However, when the bypass valve 128 is actuated to the first position, the valve seal 463 is moved away from the valve seat 464.

According to an embodiment, downstream from the bypass fluid chamber 462, the superheated fluid flows into the venturi 132. The venturi 132 can further reduce the pressure of the superheated fluid and increase the velocity of the superheated fluid before exiting the second outlet port 157 and flowing to the condenser 134. In some embodiments, the superheated fluid may increase to a sonic velocity, for example. As discussed above, in some embodiments, the vapor control module 103 can further include an injection port 465, which can receive cooling fluid from the fluid supply 104 via the de-superheat control valve 133. When valve 133 is actuated, the cooling liquid can flow into the vapor control module 103 at the venturi 132 of the bypass circuit 130. As those skilled in the art can appreciate, by increasing the velocity of the superheated fluid to sonic velocity, the cooling liquid is better dispersed and therefore, the cooling efficiency is increased. Therefore, prior to the fluid leaving the outlet port 157, the superheated fluid is cooled. This feature helps reduce the thermal shock experienced by the condenser 134.

Additionally or alternatively, a flow control valve 142 may regulate the flow of the fluid from the de-superheat control valve 133 to the injection port 465. The flow control valve 142 may control the flow based on parameters in the waste heat recovery system 100 and/or the engine 101. For example, a temperature gauge 144 may provide a temperature of fluid in the bypass circuit 130. The flow control valve 142 may control the flow of the fluid to the injection port based on the temperature of the fluid in the bypass circuit 130. The flow control valve 142 may also control the flow based on the engine's 101 power output. For example, the flow control valve 142 may increase the flow to the bypass circuit 130 when the engine's 101 power output drops due to the vehicle slowing due to the operator releasing the gas pedal. The cooling fluid may enter the bypass circuit 130 to cool the superheated fluid when the vapor control module 103 diverts the superheated fluid flow from the expander 129 to the bypass circuit 130.

According to an embodiment, the bypass valve 128 can also be actuated to a second position. In the second position, fluid flows from the inlet port 127 to the second outlet port 158 towards the expander 129. In order to actuate the bypass valve 128 to the second position, the pilot supply valve 137 can be actuated from the default, first position, to a second position. Substantially simultaneously, or prior to actuating the pilot supply valve 137, the exhaust valve 138 can also be actuated to a second position to close the exhaust valve 138. As can be appreciated, in alternative embodiments, the pilot supply valve 137 and the exhaust valve 138 can be replaced with a single 3/2-way valve or some other single valve configuration. With the exhaust valve 138 closed and the pilot supply valve 137 actuated, fluid pressure is supplied to the pilot valve actuator 139. As can be seen in FIG. 4, pressurized fluid supplied to the pilot valve actuator 139 acts on a piston member 439. When the pressure acting on the piston member 439 reaches a threshold pressure, the biasing force of the biasing member 460 and the fluid pressure acting on the valve member 461 is overcome to move the valve member 461 towards a second position (down according to the orientation shown). As the valve member 461 moves down, the valve seal 463 seals against the valve seat 464 and a second valve seal 466 unseats from a second valve seat 467.

According to an embodiment, with the valve member 461 in the second position, fluid can flow from the inlet port 127 towards the second outlet port 158 and towards the expander 129. However, with the valve seal 463 sealed against the valve seat 464, fluid is substantially prevented from flowing directly to the condenser 134. Although the valve seal 463 ideally forms a completely fluid-tight seal, even if a small amount of fluid escapes past the valve seal 463, the fluid will simply flow to the condenser 134 and thus, a pressure will not build up in the bypass fluid chamber 462.

As can be appreciated, the vapor control module 103 must be able to withstand the extreme pressures and temperatures of the superheated vapor flowing from the evaporators 120, 121. Therefore, a number of features are included in the vapor control module 103 to accommodate such extreme conditions. According to an embodiment, the sealing performed by the bypass valve 128 can be accomplished with metal-to-metal sealing. Therefore, the valve seals 463 and 466 along with the valve seats 464, 467 can all comprise a metal. Those skilled in the art will readily appreciate suitable metals. Furthermore, because of the poppet nature of the valve seals 463, 466 and valve seats 464, 467, little pressure drop is experienced through the bypass valve 128 when in the second position.

Additionally, the pilot valve actuator 139 is designed to limit the heat transferred to the elastomeric seal 468 and guide ring 469 used for the piston 439. For example, according to an embodiment, the pilot valve actuator 139 can include a plurality of heat fins 470. As is generally known in the art, heat fins can aid in dissipating heat by increasing the surface area of the component. Therefore, the heat fins 470 can remove some of the heat experienced by the contact between the housing 403 and the pilot valve actuator 139. In addition to the heat fins 470, according to an embodiment, the pilot valve actuator 139 can be coupled to the housing 403 using brackets 471. The brackets 471 can create an air gap 472 to further increase the surface area of the pilot valve actuator 139. This minimizes the surface area of contact between the pilot valve actuator 139 and the housing 403. These features can help to thermally decouple the pilot valve actuator 139 from the remainder of the vapor control module 103.

With an understanding of the liquid control module 102 and the vapor control module 103, attention is now drawn to the operation of the waste heat recovery system 100.

According to an embodiment, the waste heat recovery system 100 can be used by motor vehicles that include IC engines, such as the IC engine depicted by block 101 in FIG. 1. The waste heat recovery system 100 can be controlled by the motor vehicle's electronics control and thus, may not include its own separate electronics. However, in other embodiments, a separate waste heat recovery system electronics may be utilized.

According to an embodiment, in a default position, the system drain valve 113 is opened to allow fluid to drain from the liquid control module 102. As mentioned above, this may be desired when the engine is turned off, when energy is not required by the expander 129, or any other time that is desired by the user. When the system drain valve 113 is opened, pressurized fluid is substantially diverted from the valve module 114. However, when the system drain valve is actuated and closed, fluid is substantially prevented from exhausting from the liquid control module 102. The high-pressure pump 105 pumps fluid from the fluid supply 104 to the liquid control module 102. According to an embodiment, one of the first or second liquid control valves 118, 119 can be opened while the other is closed. Therefore, fluid can be supplied to one or more of the two or more evaporators 120, 121. According to the embodiment shown in the figures, the first liquid control valve 118 is opened to supply fluid to the first evaporator 120 while the second liquid control valve 119 is closed and thus, no fluid is supplied to the second evaporator 121.

In the embodiment shown, in a default position, the pilot supply valve 137 is also biased to a first position to prevent fluid communication between the fluid supply 104 and the pilot valve actuator 139 while the exhaust valve 138 is default to a first position to exhaust any fluid that is acting on the pilot valve actuator 139. With the pilot supply valve 137 and the exhaust valve 138 biased to their first positions, the bypass valve 128 provides a fluid communication path between the two or more evaporators 120, 121 and the condenser 134 via the bypass circuit 130. According to an embodiment, the de-superheat control valve 133 may be biased towards a first position where fluid from the fluid supply 104 is not provided to the injection port 465. However, once a threshold temperature is measured by the temperature sensors 124 and/or 144, the de-superheat control valve 133 can be actuated to provide cooling fluid to the injection port 465 to de-superheat the fluid prior to reaching the condenser 134. It should be appreciated that when the fluid coming from the evaporators 120, 121 is at a temperature below the threshold temperature, the cooling fluid may not be needed. This may occur when the engine 101 is initially started and has not warmed up to an operating temperature, for example.

According to an embodiment, the bypass valve 128 may remain in the default bypass mode when power is not needed from the expander 129 or when the temperature of the fluid has not reached the threshold temperature, for example. Power may not be needed from the expander 129 when the vehicle is braking or stopped. Therefore, in some embodiments, a brake signal may automatically de-actuate the pilot supply valve 137 and the exhaust valve 138 to allow the biasing member 460 to actuate the bypass valve 128 to the default bypass mode.

According to an embodiment, once additional power is needed or desired from the expander 129, the pilot supply valve 137 and the exhaust valve 138 can be actuated from their first position to their second position. In their second position, fluid from the fluid supply 104 can be supplied to the pilot valve actuator 139 to actuate the bypass valve 128 to its second position to provide a fluid communication path between the two or more evaporators 120, 121 and the expander 129. It should be appreciated that while the pilot fluid applied to the pilot valve actuator 139 may come from a separate fluid supply (not shown), by using the fluid supply 104 as the pilot actuating fluid, leakage issues are minimized. Furthermore, it should be appreciated that in other embodiments, the bypass valve 128 may be actuated using other known methods such as solenoids, piezo-electric actuators, stepper motors, etc. In some embodiments, the bypass valve 128 may also be proportionally controlled. Therefore, the bypass valve 128 should not be limited to pilot actuated valves.

According to an embodiment, with the bypass valve 128 actuated to the second position, the fluid coming from one or more of the two or more evaporators 120, 121 can be delivered to the expander 129 where the fluid's energy can be converted to mechanical energy. Therefore, the expander 129 allows some of the waste heat from the engine 101 to be converted back to useful energy. As shown, the fluid can leave the expander 129 and flow to the condenser 134 and eventually back to the fluid supply 104. Those skilled in the art can readily appreciate that when the bypass valve 128 is actuated to the second position to supply superheated vapor to the expander 129, the cooling liquid is not needed at the injection port 465 and thus, the de-superheat control valve 133 can be de-actuated to the default position.

As can be appreciated, when power is required at the expander 129, the liquid control valves 118, 119 can be proportionally controlled to achieve the desired pressure and temperature of the fluid leaving the two or more evaporators 120, 121 and flowing into the vapor control module 103. The liquid control valves 118, 119 can be controlled based on operating temperatures of the two or more evaporators 120, 121, for example.

The embodiments described above provide an efficient waste heat recovery system 100 that can draw heat from two or more evaporators 120, 121 in a proportional manner. According to an embodiment, the flow of fluid vapour from the evaporators 120, 121 can be controlled using liquid from the same fluid supply that delivers fluid to the evaporators 120, 121. Consequently, a separate pilot pressure is not required. Further, fluid from the fluid supply 104 can be used to de-superheat the fluid exiting the vapor control module 103 during a bypass mode. Another advantage of the waste heat recovery system 100 of the present embodiment is that the liquid control valves 118, 119 as well as the bypass valve 128 utilize metal-to-metal sealing, which can withstand higher pressures and temperatures without failing.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

Thus, although specific embodiments are described herein for illustrative purposes, various equivalent modifications are possible within the scope of the present description, as those skilled in the relevant art will recognize. The teachings provided herein can be applied to other waste heat recovery systems, and not just to the embodiments described above and shown in the accompanying figures. Accordingly, the scope of the embodiments described above should be determined from the following claims.

## Claims

1. A waste heat recovery system (100) for an engine (101), comprising:
one or more evaporators (120, 121) adapted to transfer waste heat from the engine (101) to fluid from a fluid supply (104) wherein the engine (101) generates the waste heat with the fluid, the waste heat recovery system (100) being **characterized in that**:
the fluid is fuel for the engine (101).

2. A waste heat recovery system according to claim 1, wherein the engine (101) is in fluid communication with the fluid supply (104).

3. A waste heat recovery system according to claim 1, wherein the fluid supply (104) comprises a fuel tank for the engine (101).

4. A waste heat recovery system according to claim 1, further comprising an expander (129) in fluid communication with the one or more evaporators (120, 121).

5. A waste heat recovery system according to claim 4, further comprising a condenser (134) in fluid communication with the expander (129), the condenser (134) being configured to condense the fluid and provide the condensed fluid to the fluid supply (104).

6. A waste heat recovery system according to claim 5, further comprising:
a bypass circuit (130) with an inlet in fluid communication with an outlet on the one or more evaporators (120, 121) and an inlet on the condenser (134).

7. A waste heat recovery system according to claim 6, further comprising an injection port (465) in fluid communication with the fluid supply (104) and the bypass circuit (130) and adapted to inject fluid from the fluid supply (104) into the bypass circuit (130) to cool the superheated vapor in the bypass circuit (130).

8. A method of recovering waste heat from an engine, comprising:
generating the waste heat with the engine from fluid from a fluid supply; and
transferring waste heat from the engine to fluid from the fluid supply with one or more evaporators, the method being **characterized in that**:
the fluid is a fuel for the engine.

9. The method of claim 8, further comprising:
generating superheated vapor with the one or more evaporators with the waste heat from the engine; and
cooling the superheated vapor with fluid from a fluid supply based on one or more parameters in the waste heat recovery system or the engine.

10. The method of claim 9, wherein a parameter is a temperature in the waste heat recovery system.

11. The method of claim 9, wherein a parameter is a power output of the engine.

12. The method of claim 9, wherein a parameter is a parameter of a vapor control module adapted to control flow through a bypass circuit.

13. The method of claim 9, wherein a parameter is a pressure in the waste heat recovery system.
